# EUROPÄISCHE PATENTSCHRIFT

(11) **EP 2 780 601 B1**
(45) Veröffentlichungstag und Bekanntmachung des Hinweises auf die Patenterteilung: **11.12.2019**
(21) Anmeldenummer: 12786829.7
(22) Anmeldetag: 31.10.2012
(51) Int. Cl.: F15B 15/14, F16J 15/40, F16J 15/56, F16F 9/36

(54) **GASZYLINDER, INSBESONDERE HOCHDRUCK-GASZYLINDER**
GAS CYLINDER, IN PARTICULAR HIGH-PRESSURE GAS CYLINDER
VÉRIN PNEUMATIQUE, EN PARTICULIER VÉRIN PNEUMATIQUE HAUTE PRESSION

(30) Priorität: 14.11.2011 DE 102011119011
(43) Veröffentlichungstag der Anmeldung: 24.09.2014
(73) Patentinhaber: Hydac Technology GmbH, 66280 Sulzbach/Saar (DE)
(72) Erfinder: BAUER, Frank, 66646 Marpingen (DE); FELD, Daniel, 66271 Kleinblittersdorf (DE)
(74) Vertreter: Bartels und Partner, Patentanwälte
(86) Internationale Anmeldenummer: PCT/EP2012/004564
(87) Internationale Veröffentlichungsnummer: WO 2013/072019

(56) Entgegenhaltungen:
- WO-A1-2010/079227
- DE-A1- 2 248 156
- DE-A1-102008 034 582
- DE-C- 660 208
- FR-A- 1 391 524

## Beschreibung

Die Erfindung betrifft einen Gaszylinder, insbesondere einen Hochdruck-Gaszylinder, mit den Merkmalen im Oberbegriff von Anspruch 1.

Derartige Gaszylinder, als eine Art Plungerzylinder, lassen sich unter anderem vorteilhaft als Energiespeicherzylinder bei Vorrichtungen zur EnergieRückgewinnung einsetzen. Wie beispielhaft in dem Dokument DE 10 2008 034 582 A1 aufgezeigt ist, ist bei derartigen Anwendungen die Kolbenstange des Gaszylinders mit einem bewegbaren Element einer zugehörigen Arbeitsgerätschaft verbunden. Bei dem bewegbaren Element kann es sich beispielsweise um den Ausleger eines Baggers oder einer Maschine zum Materialumschlag oder dergleichen handeln. Beim Absenken des bewegbaren Elements werden die potentielle Energie des bewegbaren Elements und der mit diesem verbundenen Last mittels des Gaszylinders gespeichert, um bei einer Aufwärtsbewegung des bewegbaren Elements das jeweilige Ausrüstungsgewicht zumindest teilweise wieder zu kompensieren.

Bei den im Betrieb im Gasdruckraum herrschenden hohen Drücken ist die Abdichtung des Gasdruckes gegenüber der Umgebungsluft, selbst wenn es sich um ein verhältnismäßig großmolekulares Arbeitsgas wie Stickstoff (N₂) handelt, sehr schwierig. Die Verhinderung von Gasverlusten ist mit üblichen Dichtsystemen kaum möglich.

Die DE 2 248 156 offenbart einen Gaszylinder, insbesondere einen Hochdruck-Gaszylinder, dessen Zylinderrohr eine Kolbenstange aufweist, die durch eine Dichtungsanordnung hindurchgeführt ist, die den im Gasdruckraum des Zylinderrohres herrschenden Gasdruck gegen den Umgebungsdruck abdichtet, wobei die Dichtungsanordnung zwischen mindestens einem dem Gasdruckraum benachbarten Dichtelement und mindestens einem weiteren, vom Gasdruckraum weiter entfernten Dichtelement einen Öldruckraum aufweist, in den mittels einer Versorgungseinrichtung Öl unter einem Druck einpressbar ist, der gleich oder höher als der im Gasdruckraum des Zylinderrohres jeweils herrschende Gasdruck ist. Die Versorgungseinrichtung ist in Form eines Kanals ausgeführt, der es ermöglicht, über einen Nippel Öl in den Öldruckraum nachzufüllen.

Die FR 1 391 524 offenbart einen Gaszylinder, bei dem eine Kolbenstange in einem Zylinderrohr verlagerbar ist und der Druck im Gasdruckraum des Zylinderrohrs über einen Kolben auf einen Flüssigkeitsdruckraum der Dichtungsanordnung einwirkt.

Die WO 2010/079227 A1 beschreibt einen Gaszylinder, insbesondere einen Hochdruck-Gaszylinder, dessen Zylinderrohr eine Kolbenstange aufweist, die durch eine Dichtungsanordnung hindurchgeführt ist, die den im Gasdruckraum des Zylinderrohres herrschenden Gasdruck gegen den Umgebungsdruck abdichtet, wobei die Dichtungsanordnung zwischen mindestens einem dem Gasdruckraum benachbarten Dichtelement und mindestens einem weiteren, vom Gasdruckraum weiter entfernten Dichtelement einen Öldruckraum aufweist, in den mittels einer Versorgungseinrichtung Öl unter einem Druck einpressbar ist, der gleich oder höher als der im Gasdruckraum des Zylinderrohres jeweils herrschende Gasdruck ist. Die Dichtungsanordnung ist als Einsatz konzipiert, der von der Kolbenstange durchgriffen wird. Durch einen Öldruck von außen ist ein Teil der Dichtungsanordnung radial gegen die Kolbenstange drückbar, um die Dichtwirkung der Dichtungsanordnung zu verstärken.

Durch DE 660 208 C ist ein Gaszylinder im Rahmen einer Luftfederung bekannt, dessen Zylinderrohr ein Abschlussteil und eine hohle Kolbenstange in Form eines Stangenrohrs aufweist, die durch eine Dichtungsanordnung hindurchgeführt ist, die den im Gasdruckraum des Zylinderrohres herrschenden Gasdruck gegen den Umgebungsdruck abdichtet, wobei die Dichtungsanordnung zwischen mindestens einem dem Gasdruckraum benachbarten Dichtelement und mindestens einem weiteren, vom Gasdruckraum weiter entfernten Dichtelement einen Öldruckraum aufweist, in den mittels einer Versorgungseinrichtung Öl unter einem Druck einpressbar ist, der gleich oder höher als der im Gasdruckraum des Zylinderrohres jeweils herrschende Gasdruck ist, wobei die Versorgungseinrichtung einen Hydrospeicher aufweist, dessen Dichtöl enthaltende Ölseite über eine Verbindung mit dem Öldruckraum und dessen Gasseite mit dem Gasdruckraum des Zylinderrohres verbunden sind.

Im Hinblick auf diesen Stand der Technik liegt der Erfindung die Aufgabe zugrunde, einen Gaszylinder zur Verfügung zu stellen, der eine erhöhte Sicherheit gegen Gasverluste bietet.

Erfindungsgemäß ist diese Aufgabe durch einen Gaszylinder gelöst, der die Merkmale des Patentanspruchs 1 in seiner Gesamtheit aufweist.

Demgemäß besteht eine wesentliche Besonderheit der Erfindung darin, dass das Stangenrohr an seinem inneren Ende zum Gasdruckraum des Zylinderrohres offen ist, so dass das Innere des die Kolbenstange bildenden Rohres als Teilvolumen des Gasdruckraums zur Verfügung steht, und dass in dem Abschlussteil drei in Axialrichtung zueinander versetzte Ringnuten ausgebildet sind, die die Kolbenstange umgeben und dass in der dem Ringraum nächstgelegenen Ringnut sich das erste Dichtelement befindet, dass die in Axialrichtung folgende Ringnut den Öldruckraum bildet, und dass in der vom Ringraum am weitesten entfernten Ringnut sich das zweite Dichtelement befindet.

Dadurch, dass das Stangenrohr an seinem inneren Ende zum Gasdruckraum des Zylinders offen ist, steht zum einen ein großes Gasvolumen respektive ein sehr großer Speicherraum, gebildet durch die hohlzylindrischen Ausnehmungen innerhalb des Zylinderrohres und der Kolbenstange, zur Verfügung. Zum anderen sind bei gegebenen Außenabmessungen und Hublängen des Zylinders das Gesamt-Gasvolumen im ausgefahrenen Zustand sowie die durch die Verschiebebewegung erreichbare Volumenänderung über die Dimensionierung der Durchmesser von Kolbenstange (Innendurchmesser und Außendurchmesser) und Zylinderohr frei einstellbar. In vorteilhafter Weise kann dadurch die Krafthubkennlinie des Gaszylinders beeinflusst werden.

Es ist ferner erfindungsgemäß vorgesehen, dass die Dichtungsanordnung mehrere, wirkungsmäßig einander nachgeordnete Dichtelemente aufweist, wobei zwischen einem dem Gasdruckraum nähergelegenen, in einer Ringnut aufgenommenen Dichtelement und einem vom Gasdruckraum weiter entfernten, in einer weiteren Ringnut aufgenommenen Dichtelement ein Öldruckraum in einer weiteren, dritten Ringnut gebildet ist, in den mittels einer Versorgungseinrichtung Öl unter einem Druck einpressbar ist, der gleich oder höher als der im Gasdruckraum des Zylinderrohres jeweils herrschende Gasdruck ist. Dadurch dichtet das dem Gasdruckraum benachbarte Dichtelement das Arbeitsgas nicht gegenüber der Umgebungsluft, sondern gegen das auf dem gleichen Drucknivenau befindliche Öl ab, während das im Öldruckraum befindliche Hochdrucköl mittels des weiteren Dichtelements gegenüber der Umgebung abgedichtet ist. Somit ist die Dichtaufgabe in zwei jeweils beherrschbare Teilaufgaben aufgeteilt, so dass größtmögliche Sicherheit gegen Gasverluste erreicht ist.

Bei einer besonders bevorzugten Ausführungsform der erfindungsgemäßen Gaszylinderanordnung weist die Kolbenstange ein in dem Zylinderrohr bewegbares Verschiebeelement auf, so dass die Kolbenstange an gegenüberliegenden Endbereichen innerhalb des Zylinderrohres sicher geführt und abgestützt ist. Dergestalt ist ein hemmnisfreier Betrieb möglich.

Bei besonders vorteilhaften Ausführungsbeispielen ist die Anordnung so getroffen, dass die Dichtelemente der Dichtungsanordnung und der zwischen ihnen befindliche Öldruckraum zueinander in fester Lagebeziehung angeordnet sind. Dadurch lässt sich die Gesamtheit der Dichtungsanordnung in einem einheitlichen, einen festen Bestandteil des Zylinderrohres bildenden Bauteil realisieren.

Bei vorteilhaften Ausführungsbeispielen weist die Versorgungseinrichtung einen Ölanschluss auf, über den Dichtöl zur Ölseite des Hydrospeichers nachfüllbar ist, wobei vorzugsweise eine Einrichtung vorhanden ist, um im Betrieb eine Überwachung der Dichtölmenge vorzunehmen. Diesbezüglich kann zumindest ein Drucksensor vorgesehen sein, der den im Öldruckraum der Dichtungsanordnung herrschenden Öldruck signalisiert.

In vorteilhafter Weise kann der Hydrospeicher der Versorgungseinrichtung in Form eines Kolbenspeichers ausgebildet sein.

Die Benutzung eines Kolbenspeichers eröffnet die vorteilhafte Möglichkeit, den Kolben des Kolbenspeichers für eine Bewegung in Richtung auf die Ölseite mechanisch vorzuspannen, beispielsweise mittels einer Federanordnung. Bei auf der Gasseite des Kolbenspeichers herrschendem Gasdruck des Gasdruckraums im Zylinderraum stellt sich aufgrund der mechanischen Vorspannung des Speicherkolbens im Öldruckraum ein entsprechendes höheres Druckniveau ein, wodurch in vorteilhafter Weise das gegenüber dem Gasdruck abdichtende Dichtelement entsprechend druckgestützt ist.

Bei besonders vorteilhaften Ausführungsbeispielen ist der Kolbenspeicher in den die Dichtungsanordnung enthaltenden Abschlussteil des Zylinderrohres derart integriert, dass der Speicherzylinder mit seiner Gasseite zum Gasdruckraum des Zylinderrohres hin offen ist. Dadurch bildet der Gaszylinder einschließlich der durch Öldruck abgestützten Dichtungsanordnung und der zugehörigen Versorgungseinrichtung eine geschlossene Baueinheit ohne äußere Zusatzaggregate.

Die Anordnung kann mit besonderem Vorteil so getroffen sein, dass der Speicherzylinder im Abschlussteil durch einen an den Gasdruckraum angrenzenden Ringraum gebildet ist, der die Kolbenstange umgibt und einen Ringkolben enthält. Dadurch stehen bei gegebenen Außenabmessungen des Zylinderrohres und dessen Abschlussteils in vorteilhafter Weise ein großes Volumen für den Kolbenspeicher und damit ein großer Ölvorrat für die Versorgung des Öldruckraums zur Verfügung.

Bei besonders vorteilhaften Ausführungsbeispielen weist das Verschiebeelement am Ende der Kolbenstange ein kolbenartiges Führungsteil auf. Dieses kann Gasdurchlässe aufweisen, die bei klein gewählten Durchlassquerschnitten eine Drosselwirkung bei Verschiebebewegungen haben oder bei entsprechend großflächiger Gestalt keine Drosselwirkung bei Verschiebebewegungen entfalten, so dass das Verschiebeelement eine reine Führungsfunktion an der Innenseite des Zylinderrohres erfüllt.

Das Führungsteil kann unrund und derart ausgebildet sein, dass es lediglich mit Eckbereichen an der Wand des Zylinderrohres geführt ist, wobei an den Eckbereichen und/oder an der Innenwand Gleitführungen vorgesehen sein können.

Nachstehend ist die Erfindung anhand von in der Zeichnung dargestellten Ausführungsbeispielen im Einzelnen erläutert. Es zeigen:
- Fig. 1: einen schematisch vereinfacht gezeichneten Längsschnitt eines Ausführungsbeispiels des erfindungsgemäßen Gaszylinders;
- Fig. 1A: eine vergrößert gezeichnete Teildarstellung des in Fig. 1 strichpunktiert gekennzeichneten Bereichs;
- Fig. 2: einen schematisch vereinfacht gezeichneten Längsschnitt eines zweiten Ausführungsbeispiels des Gaszylinders;
- Fig. 2A: eine vergrößert gezeichnete Teildarstellung des in Fig. 2 strichpunktiert gekennzeichneten Bereichs;
- Fig. 3: einen schematisch vereinfacht gezeichneten Längsschnitt eines weiteren Ausführungsbeispiels des Gaszylinders;
- Fig. 3A: eine vergrößert gezeichnete Teildarstellung des in Fig. 3 strichpunktiert gekennzeichneten Bereichs;
- Fig.4: einen schematisch vereinfacht und vergrößert gezeichneten Teillängsschnitt lediglich des die Dichtungsanordnung aufweisenden Abschlussteils des Zylinderrohres eines weiteren Ausführungsbeispiels;
- Fig. 5: einen schematisch vereinfacht gezeichneten Längsschnitt des Gaszylinders eines weiteren Ausführungsbeispiels;
- Fig. 5A und 5B: in vergrößerter Darstellung zwei alternative Ausgestaltungen des in Fig. 5 strichpunktiert gekennzeichneten Bereichs;
- Fig. 6: einen schematisch vereinfachten Längsschnitt eines weiteren Ausführungsbeispiels des Gaszylinders;
- Fig. 7: eine Schnittdarstellung entsprechend der Schnittlinie VII-VII von Fig. 6;
- Fig. 8: einen schematisch vereinfacht gezeichneten Längsschnitt eines weiteren Ausführungsbeispieles des erfindungsgemäßen Gaszylinders ohne Verschiebeelement;
- Fig. 9: eine Abdichtungslösung für einen Gaszylinder im Längsschnitt, bei dem vergleichbar der Darstellung nach der Fig. 8 der Ringkolben direkt am Außenumfang der hohlzylindrischen Kolbenstange anliegt;
- Fig. 10: einen schematisch vereinfacht gezeichneten Längsschnitt eines weiteren Ausführungsbeispiels des erfindungsgemäßen Gaszylinders, bei dem das als Kolbenboden ausgebildete Verschiebeelement der Kolbenstange zur Fluidsteuerung Drossel- und Rückschlagventile aufweist; und
- Fig. 11: eine Prinzipdarstellung einer Überwachungseinrichtung für die Kolbenposition des Dichtsystems, bevorzugt durch einen Ultraschallsensor real isiert.

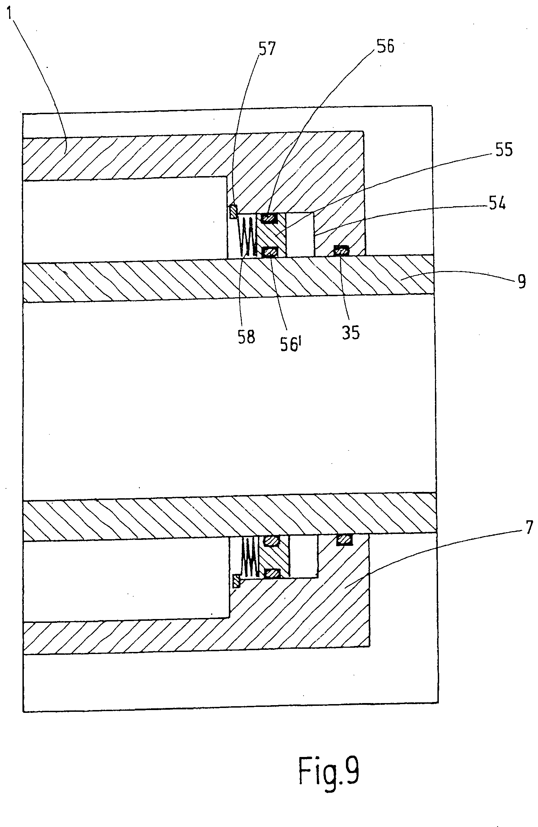

Die Ausführungsform der Fig. 9 dient lediglich der Erläuterung des Hintergrundes der Erfindung und ist nicht Gegenstand eines Anspruches.

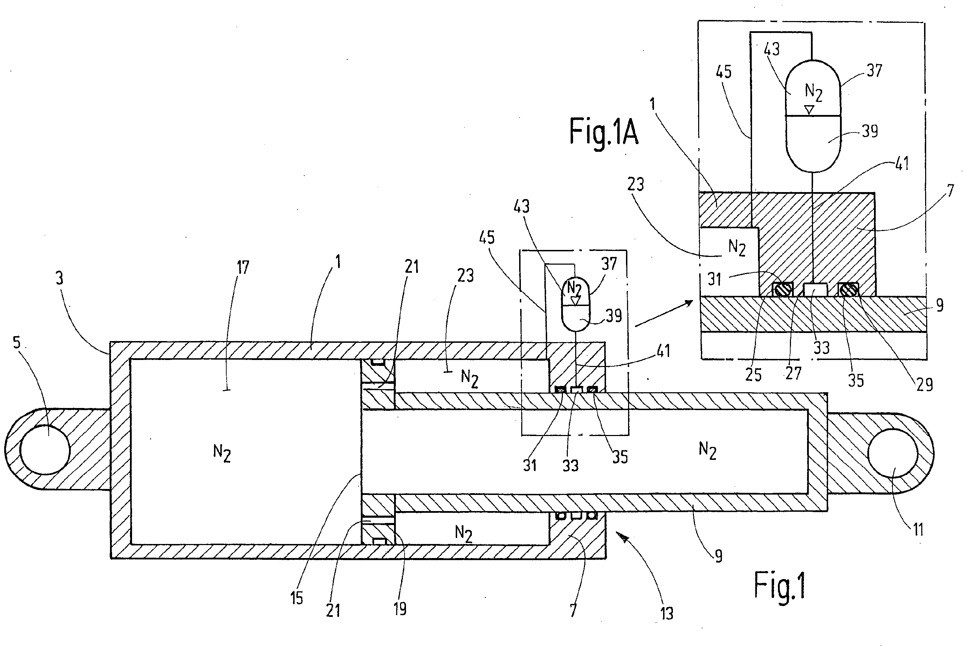

Das in Fig. 1 gezeigte Ausführungsbeispiel weist ein Zylinderrohr 1 auf, an dessen geschlossenem Ende 3 sich ein Lagerauge 5 befindet. Am gegenüberliegenden Ende weist das Zylinderrohr 1 ein Zylinder-Abschlussteil 7 auf, das eine abgedichtete Durchführung für eine Kolbenstange 9 bildet, an deren äußerem Ende sich ein Lagerauge 11 befindet. Die Abdichtung der Kolbenstange 9 gegenüber dem Abschlussteil 7 erfolgt mittels einer Dichtungsanordnung 13. Die Kolbenstange 9 hat die Form eines zylindrischen Hohlkörpers, so dass ein Rohr gebildet ist, das an seinem inneren Ende 15 zum Gasdruckraum 17 des Zylinderrohres 1 hin offen ist. Der Gasdruckraum 17 ist (über einen nicht dargestellten Füllanschluss) mit einem unter hohem Druck stehenden Arbeitsgas wie beispielsweise N2 befüllt. An dem offenen Ende 15 der Kolbenstange 9 befindet sich ein kolbenartiges Führungsteil 19, das bei Bewegung der Kolbenstange 9 an der Innenwand des Zylinderrohres 1 geführt ist. Im Führungsteil 19 befinden sich Durchgänge 21, die den Gasdruckraum 17 mit dem die Kolbenstange 9 umgebenden Ringraum 23 als Teilvolumen des Gasdruckraums 17 verbinden. Das Innere des die Kolbenstange 9 bildenden Rohres steht als weiteres Teilvolumen zur Verfügung.

Wie dem Teilausschnitt der Fig. 1A deutlicher zu entnehmen ist, ist die Dichtungsanordnung 13 mehrteilig aufgebaut. Zu diesem Zweck sind im Abschlussteil 7 drei in Axialrichtung zueinander versetzte Ringnuten 25, 27 und 29 ausgebildet, die die Kolbenstange 9 umgeben. In der dem Ringraum 23 nächstgelegenen Ringnut 25 befindet sich ein erstes Dichtelement 31. Die in Axialrichtung folgende Ringnut 27 bildet einen Öldruckraum 33. In der vom Ringraum 23 am weitesten entfernten Ringnut 29 befindet sich ein zweites Dichtelement 35.

Der Öldruckraum 33 dient der Aufnahme von Hochdrucköl, das unter einem Druck steht, der zumindest gleich dem im Zylinderrohr 1 herrschenden Gasdruck ist. Im vorliegenden Fall ist zur Versorgung des Öldruckraums 33 eine Versorgungseinrichtung in Form eines Hydrospeichers 37 vorgesehen, dessen Ölseite 39 über eine Verbindung 41 unmittelbar mit dem Öldruckraum 33 in Verbindung ist. Die Gasseite 43 des Hydrospeichers 37 ist über eine Verbindung 45 mit dem Ringraum 23 des Zylinderrohres 1 verbunden. Dadurch ist der Hydrospeicher 37 mit dem im Zylinderrohr 1 herrschenden Gasdruck vorgespannt, so dass der Hydrospeicher 37 im Öldruckraum 33 einen entsprechenden Öldruck aufrechterhält. Dadurch dichtet das erste Dichtelement 31 Gas gegenüber Öl bei an dem Dichtelement 31 herrschendem Gleichdruck ab, während das äußere, zweite Dichtelement 35 Hochdrucköl gegenüber der Umgebung abdichtet. Die Dichtaufgabe ist so in zwei beherrschbare Teilaufgaben aufgeteilt, wodurch die Gefahr des Gasverlustes zur Umgebung hin verhindert ist.

Es versteht sich, dass, wie dies auch bei den nachstehend zu beschreibenden weiteren Ausführungsbeispielen der Fall sein kann, die Dichtungsanordnung 13 mehr als zwei axial zueinander versetzte Dichtelemente mit einer entsprechenden Anzahl dazwischen befindlicher Öldruckräume aufweisen kann.

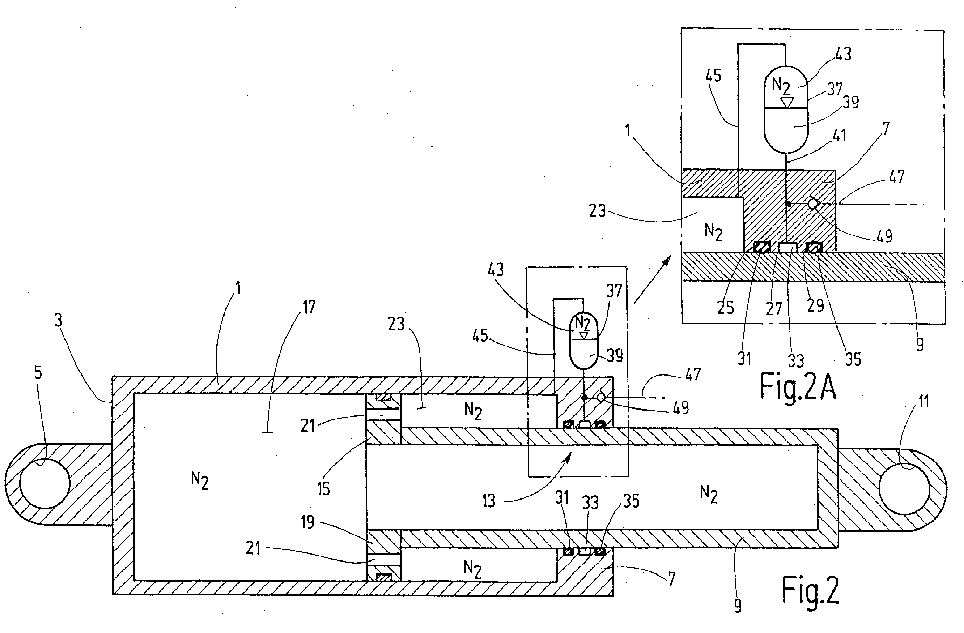

Fig. 2 und 2A zeigen ein Ausführungsbeispiel, das sich gegenüber Fig. 1 und 1A lediglich insofern unterscheidet, als für die Versorgungseinrichtung ein Ölanschluss 47 vorgesehen ist, der es, abgesichert durch ein Rückschlagventil 49, ermöglicht, über die Verbindung 41 Dichtöl zur Ölseite 39 des Hydrospeichers 37 nachzufüllen.

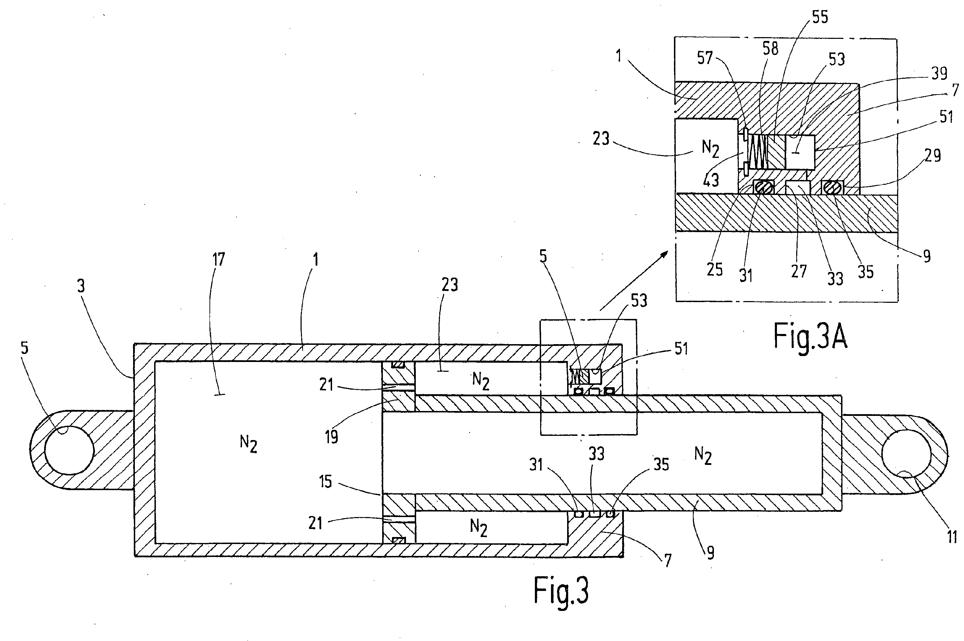

Das in den Fig. 3 und 3A gezeigte weitere Ausführungsbeispiel unterscheidet sich von den vorherigen Beispielen dadurch, dass der Hydrospeicher der Öldruck-Versorgungseinrichtung durch einen Kolbenspeicher 51 gebildet ist und dass dieser in das Zylinder-Abschlussteil 7 integriert ist. Zu diesem Zweck ist im Abschlussteil 7 als Speicherzylinder eine Bohrung 53 ausgebildet, die an den Ringraum 23 des Zylinderrohres 1 angrenzt. Ein Speicherkolben 55 dichtet die Ölseite 39 des Kolbenspeichers 51, die mit dem Öldruckraum 33 in Verbindung ist, gegenüber der Gasseite 43 ab, die unmittelbar an den Ringraum 23 angrenzt. Eine zwischen einem Sicherungsring 57 und dem Speicherkolben 55 eingespannte Druckfeder 58 spannt den Speicherkolben 55 in Richtung auf die Ölseite 39 vor, so dass der Öldruck im Öldruckraum 33 entsprechend der mechanischen Vorspannung gegenüber dem im Zylinderrohr 1 herrschenden Gasdruck etwas erhöht ist. Das dem Ringraum 23 nächstgelegene Dichtelement 31 ist daher gegenüber dem Gasdruck druckgestützt, so dass das Dichtverhalten weiter verbessert ist.

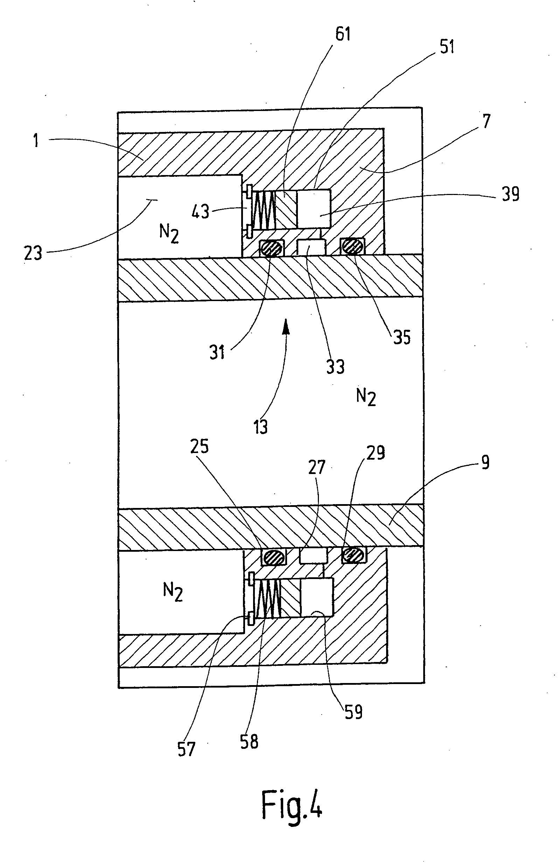

Die Fig. 4 zeigt eine Variante für die Bauweise des Kolbenspeichers 51. Dessen Speicherzylinder ist hierbei durch einen Ringraum 59 gebildet, der konzentrisch zur Kolbenstangendurchführung im Zylinder-Abschlussteil 7 ausgebildet ist und an den Ringraum 23 als Bestandteil des Gasdruckraums 17 angrenzt. In dem durch den Ringraum 59 gebildeten Speicherzylinder ist ein Ringkolben 61 als Speicherkolben angeordnet. Wie beim vorherigen Beispiel ist der Ringkolben 61 durch eine Druckfeder 58 vorgespannt, die an einem Sicherungsring 57 abgestützt ist.

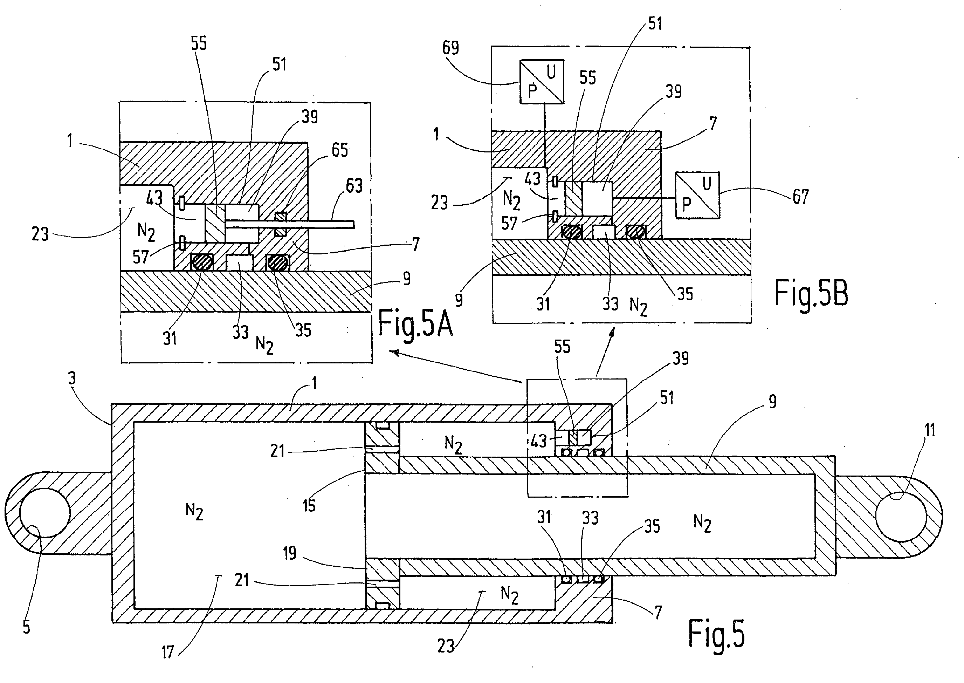

Die Ausführungsbeispiele gemäß Fig. 5, 5A und 5B sind Beispiele, bei denen die Versorgungseinrichtung für die Öldruckversorgung des Öldruckraums 33 mit einer Überwachungseinrichtung für den Ölvorrat versehen ist. Diesbezüglich zeigt Fig. 5A eine mechanische Lösung, bei der der Speicherkolben 55 des Kolbenspeichers 51 mit einem Messstab 63 versehen ist, der über eine Ölabdichtung 65 nach außen geführt ist und die Stellung des Speicherkolbens 55 und damit die Größe des Ölvorrats im Kolbenspeicher 51 anzeigt.

Demgegenüber zeigt Fig. 5B eine Lösung, bei der ein Drucksensor 67 den Öldruck in der Ölseite 39 des Kolbenspeichers 51 signalisiert. Bei auf der Ölseite 39 fehlendem Ölvorrat ist der angezeigte Druck gleich Null. Die Null-Anzeige kann auch davon herrühren, dass im Zylinderrohr 1 kein Gasdruck herrscht. Um die Eindeutigkeit der Überwachung des Ölvorrats sicherzustellen, kann ein zweiter Drucksensor 69 auch den Gasdruck im Ringraum 23 überwachen, um diesen Druckwert mit dem durch den ersten Drucksensor 67 angezeigten Wert zu vergleichen.

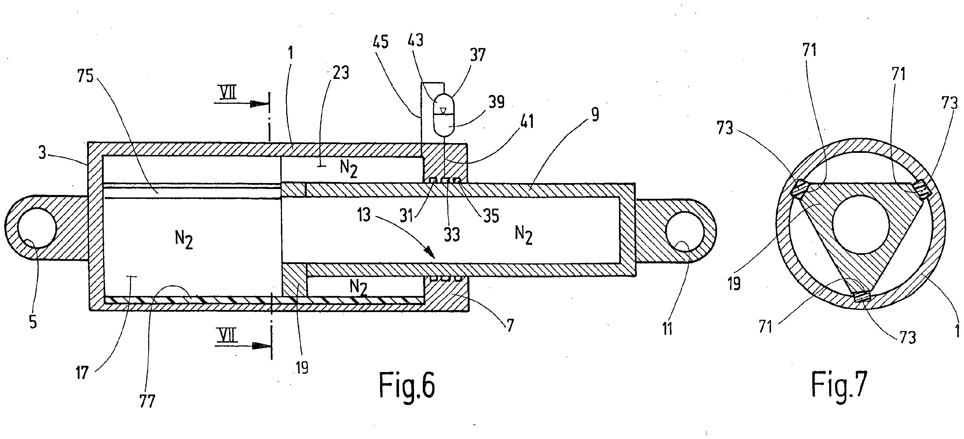

Die Fig. 6 und 7 zeigen ein weiteres Ausführungsbeispiel, bei dem das am Ende 15 der Kolbenstange 9 befindliche Führungsteil 19 dreieckförmig gestaltet ist und lediglich mit Eckbereichen 71 an der Innenseite des Zylinderrohres 1 geführt ist. Für eine diesbezügliche Gleitführung können an den Eckbereichen 71 des Führungsteils 19 Gleitkörper 73 vorgesehen sein, die in Führungsnuten 75 geführt sind, die in die Wand des Zylinderrohres 1 eingearbeitet sind. Alternativ können an der Wand des Zylinderrohres 1 Führungsschienen 77 zur Führung des Führungsteils 19 der Kolbenstange 9 vorgesehen sein.

Die nachfolgenden Ausführungsformen werden nur noch insofern erläutert, als es sich maßgebend von den vorstehend beschriebenen Ausführungsformen unterscheiden. Dabei werden für dieselben Bauteile im Wesentlichen dieselben Bezugszeichen wie vorstehend angegeben benutzt, wobei insoweit die bereits getroffenen Ausführungen auch insoweit für die nachfolgend beschriebenen Ausführungsformen gelten.

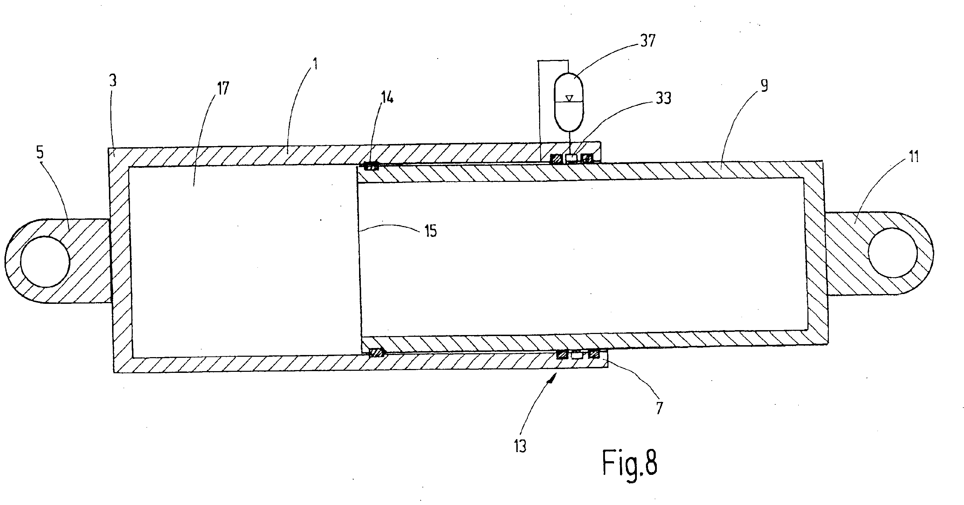

So unterscheidet sich die Gaszylinderlösung nach der Fig. 8 von der Ausführungsform nach der Fig. 1 dadurch, dass die Kolbenstange 9 kein Führungsteil in Form eines Kolbenbodens aufweist, sondern vielmehr ist bei dieser Ausführungsform die Kolbenstange 9 an ihrem freien Ende außenumfangsseitig über die Ringdichtung 14 entlang des Innenumfanges des Zylinderrohres 1 in dichtender Weise geführt. Die dahingehende Ringdichtung 14 ist im Endbereich der Kolbenstange 9 in der Höhe ihres Endes 15 angeordnet.

Durch die dahingehende technische Lösung entsteht ein sehr großer Speicherraum, gebildet durch die hohlzylindrischen Ausnehmungen innerhalb des Zylinderrohres 1 und der Kolbenstange 9. Anstelle des Arbeitsgases Stickstoff können auch andere Arbeitsmedien, bevorzugt in Gasform, eingesetzt werden, wie beispielsweise Edelgase, um dergestalt das Arbeits- und Speichervermögen des Gaszylinders an vorgegebene Anwendungssituationen optimal anpassen zu können.

Die Ausführungsform nach der Fig. 9 entspricht im Wesentlichen der Ausführungsform nach den Figuren 3 und 3A mit der Maßgabe, dass der ringförmige Speicherkolben 55 außen- und innenumfangsseitig abgedichtet in einer umlaufenden Ausnehmung 54 des Zylinderrohres 1 eingesetzt ist, wobei eine äußere Ringdichtung 56 des Speicherkolbens 55 sich am Innenumfang der umlaufenden Ausnehmung 54 in Form einer hohlzylindrischen Ringnut abstützt, und das innenumfangsseitig verlaufende weitere Dichtringelement 56' stützt sich an der zylindrischen Außenwand der Kolbenstange 9 ab.

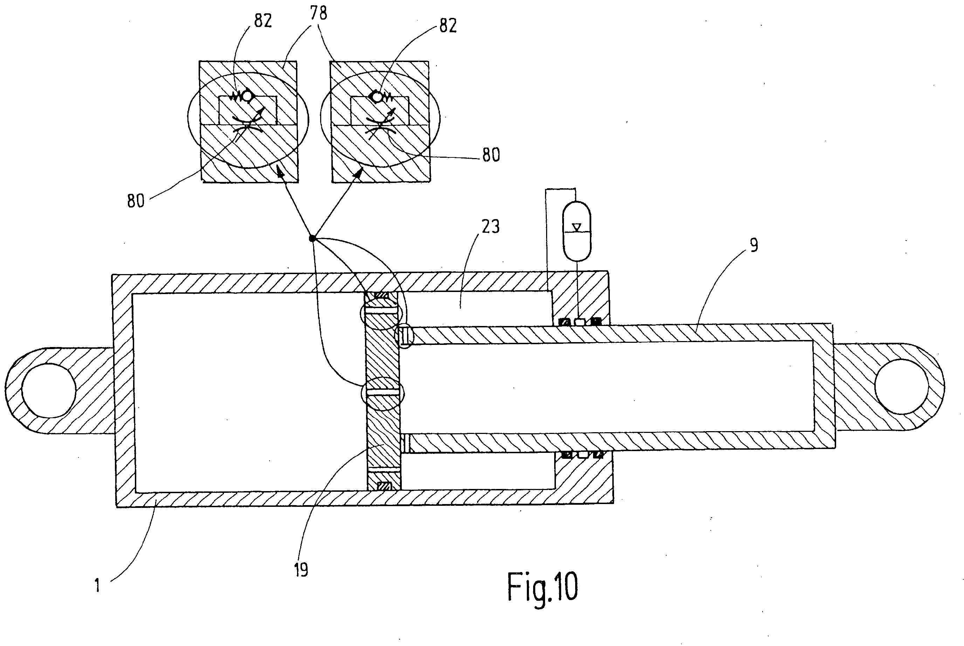

Die Ausführungsform nach der Fig. 10 hat wiederum ihre Entsprechung in der Darstellung nach den Figuren 1 und 1A mit der Maßgabe, dass anstelle der Durchgänge 21 zumindest teilweise Ventileinheiten 78 treten. Die dahingehenden Ventileinheiten 78 im Führungsteil 19, das eine Art Kolbenboden bildet, bestehen aus einer bevorzugt einstellbaren Drossel oder Blende 80, wobei hierzu parallelgeschaltet noch ein federbelastetes Rückschlagventil 82 treten kann, dessen Öffnungsrichtung wahlweise in das Innere des Zylinderrohres oder in das Innere der hohlzylindrischen Kolbenstange 9 weist. Durch die genannten Drossel- und/oder Rückschlagventile 80, 82 in den gezeigten verschiedenen Ausführungen nach der Fig. 10 lassen sich zwischen den genannten Kammern, also auch zwischen der Kammer 23 und dem Inneren der Kolbenstange 9, die Gas- oder Fluidströme steuern.

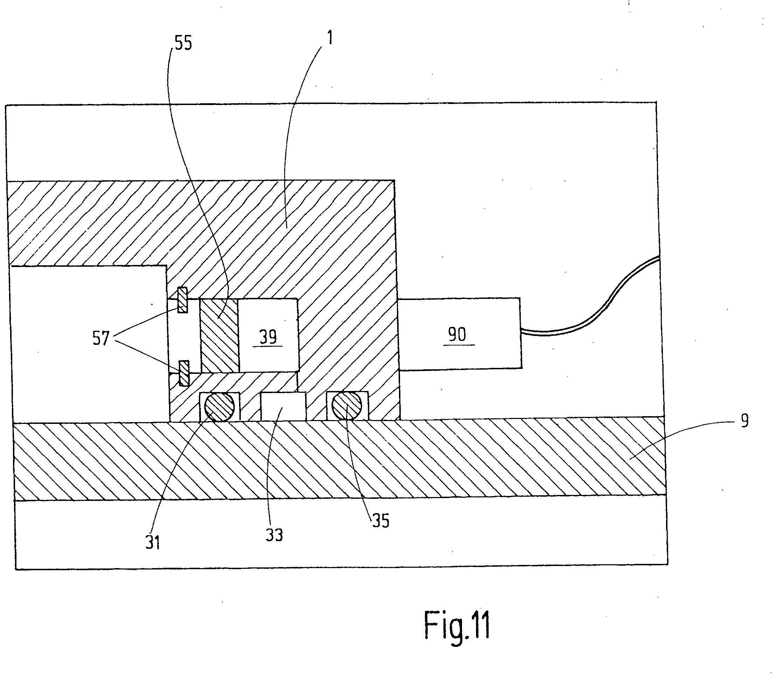

Bei der Ausführungsform nach der Fig. 11, die dem Grunde nach den Ausgestaltungen nach den Figuren 5, 5A und 5B nachempfunden ist, dient ein Ultraschallmesskopf 90 zur Bestimmung der jeweiligen Verschiebeposition des Speicherkolbens 55 innerhalb der Ausnehmung des zylindrischen Führungsrohres 1. Anstelle des Ultraschallsensors 90, der elektrisch an eine Spannungsquelle und/oder Auswerteeinheit anschließbar ist, können auch andere Positionsmesssysteme (nicht dargestellt) für den Speicherkolben 55 treten.

Wie die vorstehenden Ausführungsformen verdeutlichen, lässt sich insbesondere über die Wahl des Außen- und Innendurchmessers der jeweiligen Kolbenstange 9 und des Innendurchmessers des Zylinderrohres 1 die Kraft-Hub-Kennlinie des Gaszylinders entsprechend einstellen.

## Patentansprüche

1. Gaszylinder, insbesondere Hochdruck-Gaszylinder, dessen Zylinderrohr (1) ein Abschlussteil (7) und eine hohle Kolbenstange (9) in Form eines Stangenrohrs aufweist, die von einem Ringraum (23) umgeben ist und durch eine Dichtungsanordnung (13) hindurchgeführt ist, die den im Gasdruckraum (17, 23) des Zylinderrohres (1) herrschenden Gasdruck gegen den Umgebungsdruck abdichtet, wobei die Dichtungsanordnung (13) zwischen mindestens einem ersten dem Gasdruckraum (17, 23) benachbarten Dichtelement (31) und mindestens einem zweiten, vom Gasdruckraum (17, 23) weiter entfernten Dichtelement (35) einen Öldruckraum (33) aufweist, in den mittels einer Versorgungseinrichtung (37, 51) Öl unter einem Druck einpressbar ist, der gleich oder höher als der im Gasdruckraum (17, 23) des Zylinderrohres (1) jeweils herrschende Gasdruck ist, wobei die Versorgungseinrichtung einen Hydrospeicher (37; 51) aufweist, dessen Dichtöl enthaltende Ölseite (39) über eine Verbindung (41) mit dem Öldruckraum (33) und dessen Gasseite (43) mit dem Gasdruckraum (17, 23) des Zylinderrohres (1) verbunden sind, **dadurch gekennzeichnet, dass** das Stangenrohr an seinem inneren Ende (15) zum Gasdruckraum (17) des Zylinderrohres (1) offen ist, so dass das Innere des die Kolbenstange (9) bildenden Rohres als Teilvolumen des Gasdruckraums (17) zur Verfügung steht, und dass in dem Abschlussteil (7) drei in Axialrichtung zueinander versetzte Ringnuten (25, 27, 29) ausgebildet sind die die Kolbenstange (9) umgeben und dass in der dem Ringraum (23) nächstgelegenen Ringnut sich das erste Dichtelement (31) befindet, dass die in Axialrichtung folgende Ringnut (27) den Öldruckraum (33) bildet und dass in der vom Ringraum (23) am weitesten entfernten Ringnut (29) sich das zweite Dichtelement (35) befindet.

2. Gaszylinder nach Anspruch 1, **dadurch gekennzeichnet, dass** die Kolbenstange (9) ein in dem Zylinderrohr (1) bewegbares Verschiebeelement (19) aufweist.

3. Gaszylinder nach Anspruch 1 oder 2, **dadurch gekennzeichnet, dass** die Dichtelemente (31, 35) der Dichtungsanordnung (13) und der zwischen ihnen befindliche Öldruckraum (33) zueinander in fester Lagebeziehung angeordnet sind.

4. Gaszylinder nach einem der vorstehenden Ansprüche, **dadurch gekennzeichnet, dass** die Versorgungseinrichtung einen Ölanschluss (47) aufweist, über den Dichtöl zur Ölseite (39) des Hydrospeichers (37, 51) nachfüllbar ist.

5. Gaszylinder nach einem der vorstehenden Ansprüche, **dadurch gekennzeichnet, dass** die Versorgungseinrichtung eine Einrichtung (63; 67, 69) zur Überwachung der Dichtölmenge aufweist.

6. Gaszylinder nach Anspruch 5, **dadurch gekennzeichnet, dass** die Überwachungseinrichtung mindestens einen Drucksensor (67, 69) aufweist.

7. Gaszylinder nach einem der vorstehenden Ansprüche, **dadurch gekennzeichnet, dass** der Hydrospeicher der Versorgungseinrichtung in Form eines Kolbenspeichers (51) ausgebildet ist.

8. Gaszylinder nach Anspruch 7, **dadurch gekennzeichnet, dass** der Kolben (55; 61) des Kolbenspeichers (51) für eine Bewegung in Richtung auf die Ölseite (39) mechanisch vorgespannt ist.

9. Gaszylinder nach Anspruch 7 oder 8, **dadurch gekennzeichnet, dass** der Kolbenspeicher (51) in den die Dichtungsanordnung (13) enthaltenden Abschlussteil (7) des Zylinderrohres (1) derart integriert ist, dass der Speicherzylinder (53; 59) des Kolbenspeichers (51) mit seiner Gasseite (43) zum Gasdruckraum (17, 23) des Zylinderrohres (1) hin offen ist.

10. Gaszylinder nach dem vorstehenden Anspruch, **dadurch gekennzeichnet, dass** der Speicherzylinder im Abschlussteil (7) durch einen an den Gasdruckraum (17, 23) angrenzenden Ringraum (59) gebildet ist, der die Kolbenstange (9) umgibt und einen Ringkolben (61) enthält.

11. Gaszylinder nach Anspruch 2 oder nach einem der vorstehenden von Anspruch 2 abhängigen Ansprüche, **dadurch gekennzeichnet, dass** das Verschiebeelement am Ende (15) der Kolbenstange (9) ein kolbenartiges Führungsteil (19) aufweist.

12. Gaszylinder nach Anspruch 11, **dadurch gekennzeichnet, dass** das Führungsteil (19) unrund gestaltet und mit Eckbereichen (71) mittels Gleitführungen (73; 75) an der Wand des Zylinderrohres (1) geführt ist.

13. Gaszylinder nach einem der vorstehenden Ansprüche, **dadurch gekennzeichnet, dass** über die Wahl des Außen- und Innendurchmessers der Kolbenstange (9) und des Innendurchmessers des Zylinderrohres (1) sich die Kraft-Hub-Kennlinie des Gaszylinders einstellen lässt.

## Claims

1. Gas cylinder, in particular high-pressure gas cylinder, whose cylinder pipe (1) has a terminal portion (7) and a hollow piston rod (9) in the form of a rod-like pipe, which is surrounded by an annular space (23) and which is guided through a sealing arrangement (13) which seals the gas pressure which is applied in the gas pressure chamber (17, 23) of the cylinder pipe (1) against the ambient pressure, wherein the sealing arrangement (13) has between at least a first sealing element (31) adjacent to the gas pressure chamber (17, 23) and at least a second sealing element (35) further away from the gas pressure chamber (17, 23) an oil pressure chamber (33), into which by means of a supply device (37, 51) oil can be pressed under a pressure which is equal to or greater than the gas pressure which is applied in the gas pressure chamber (17, 23) of the cylinder pipe (1) in each case, wherein the supply device has a hydraulic accumulator (37; 51) whose oil side (39) containing sealing oil is connected via a connection (41) to the oil pressure chamber (33) and whose gas side (43) is connected to the gas pressure chamber (17, 23) of the cylinder pipe (1), **characterised in that** the rod-like pipe is open at the inner end (15) thereof with respect to the gas pressure chamber (17) of the cylinder pipe (1) so that the inner side of the pipe which forms the piston rod (9) is available as a part-volume of the gas pressure chamber (17), and **in that** in the terminal portion (7) there are formed three annular grooves (25, 27, 29) which are offset with respect to each other in an axial direction and which surround the piston rod (9) and **in that** the first sealing element (31) is located in the annular groove nearest the annular space (23), **in that** the annular groove (27) which follows in the axial direction forms the oil pressure chamber (33) and **in that** the second sealing element (35) is located in the annular groove (29) furthest away from the annular space (23).

2. Gas cylinder according to claim 1, **characterised in that** the piston rod (9) has a displacement element (19) which can be moved in the cylinder pipe (1).

3. Gas cylinder according to claim 1 or claim 2, **characterised in that** the sealing elements (31, 35) of the sealing arrangement (13) and the oil pressure chamber (33) which is located between them are arranged in a fixed positional relationship with respect to each other.

4. Gas cylinder according to any one of the preceding claims, **characterised in that** the supply device has an oil connection (47), via which sealing oil can be re-filled at the oil side (39) of the hydraulic accumulator (37, 51).

5. Gas cylinder according to any one of the preceding claims, **characterised in that** the supply device has a device (63; 67, 69) for monitoring the quantity of sealing oil.

6. Gas cylinder according to claim 5, **characterised in that** the monitoring device has at least one pressure sensor (67, 69) .

7. Gas cylinder according to any one of the preceding claims, **characterised in that** the hydraulic accumulator of the supply device is constructed in the form of a piston accumulator (51) .

8. Gas cylinder according to claim 7, **characterised in that** the piston (55; 61) of the piston accumulator (51) is mechanically pretensioned for a movement in the direction towards the oil side (39).

9. Gas cylinder according to claim 7 or 8, **characterised in that** the piston accumulator (51) is integrated in the terminal portion (7) of the cylinder pipe (1) which contains the sealing arrangement (13) in such a manner that the storage cylinder (53, 59) of the piston accumulator (51) is open with the gas side (43) thereof in the direction towards the gas pressure chamber (17, 23) of the cylinder pipe (1).

10. Gas cylinder according to the preceding claim, **characterised in that** the storage cylinder is formed in the terminal portion (7) by means of an annular space (59) which is adjacent to the gas pressure chamber (17, 23) and which surrounds the piston rod (9) and which contains an annular piston (61).

11. Gas cylinder according to claim 2 or according to any one of the preceding claims dependent on claim 2, **characterised in that** the displacement element has at the end (15) of the piston rod (9) a piston-like guiding portion (19).

12. Gas cylinder according to claim 11, **characterised in that** the guiding portion (19) is constructed in a non-round manner and is guided with corner regions (71) by means of sliding guides (73; 75) on the wall of the cylinder pipe (1).

13. Gas cylinder according to any one of the preceding claims, **characterised in that** the force/stroke characteristic line of the gas cylinder can be adjusted via the selection of the outer diameter and inner diameter of the piston rod (9) and the inner diameter of the cylinder pipe (1).

## Revendications

1. Vérin pneumatique, notamment vérin pneumatique à haute pression, dont le tube (1) a une partie (7) de fermeture et une tige (9) creuse de piston, sous la forme d'un tube formant tige, qui est entouré d'un espace (23) annulaire et qui passe à travers un agencement (13) d'étanchéité, qui rend étanche, vis-à-vis de la pression ambiante, la pression du gaz régnant dans l'espace (17, 23) de pression du gaz du tube (1) du vérin, l'agencement (13) d'étanchéité ayant, entre au moins un premier élément (31) d'étanchéité voisin de l'espace (17, 23) de pression du gaz et au moins un deuxième élément (35) d'étanchéité plus éloigné de l'espace (17, 23) de pression du gaz, un espace (33) de pression d'huile, dans lequel, au moyen d'un dispositif (37 ; 51) d'alimentation, de l'huile peut être injectée sous une pression supérieure ou égale à la pression de gaz régnant respectivement dans l'espace (17, 23) de pression de gaz du tube (1) du vérin, le dispositif d'alimentation ayant un accumulateur (37 ; 51) hydraulique, dont le côté (39) d'huile contenant de l'huile d'étanchéité communique par une liaison (41) avec l'espace (33) de pression d'huile et dont le côté (43) de gaz communique avec l'espace (17, 23) de pression de gaz du tube (1) du vérin, **caractérisé en ce que** le tube formant tige est ouvert, à son extrémité (15) intérieur, vers l'espace (17) de pression de gaz du tube (1) du vérin, de sorte que l'intérieur du tube formant la tige (9) du piston est disponible comme volume partiel de l'espace (17) de pression de gaz, et **en ce que**, dans la partie (7) de fermeture, sont constituées trois rainures (25, 27, 29) annulaires décalées les unes des autres dans la direction axiale, qui entourent la tige (9) du piston, et **en ce que** le premier élément (31) d'étanchéité se trouve dans la rainure annulaire se trouvant la plus près de l'espace (23) annulaire, **en ce que** la rainure (27) annulaire suivante dans la direction axiale forme l'espace (33) de pression d'huile et **en ce que** le deuxième élément (35) d'étanchéité se trouve dans la rainure (29) annulaire la plus loin de l'espace (23) annulaire.

2. Vérin pneumatique suivant la revendication 1, **caractérisé en ce que** la tige (9) du piston a un élément de coulissement mobile dans le tube (1) du vérin.

3. Vérin pneumatique suivant la revendication 1 ou 2, **caractérisé en ce que** les éléments (31, 35) d'étanchéité de l'agencement (13) d'étanchéité et l'espace (33) de pression d'huile se trouvant entre eux sont disposés les uns par rapport aux autres dans une relation de position fixe.

4. Vérin pneumatique suivant l'une des revendications précédentes, **caractérisé en ce que** le dispositif d'alimentation a un raccord (47) pour de l'huile, par lequel de l'huile d'étanchéité peut être chargée du côté (39) d'huile de l'accumulateur (37, 51) hydraulique.

5. Vérin pneumatique suivant l'une des revendications précédentes, **caractérisé en ce que** le dispositif d'alimentation a un dispositif (63 ; 67, 69) de contrôle de la quantité d'huile d'étanchéité.

6. Vérin pneumatique suivant la revendication 5, **caractérisé en ce que** le dispositif de contrôle a au moins un capteur (67, 69) de pression.

7. Vérin pneumatique suivant l'une des revendications précédentes, **caractérisé en ce que** l'accumulateur hydraulique du dispositif d'alimentation est constitué sous la forme d'un accumulateur (51) à piston.

8. Vérin pneumatique suivant la revendication 7, **caractérisé en ce que** le piston (55 ; 61) de l'accumulateur (51) à piston est précontraint mécaniquement pour un déplacement dans la direction du côté (39) d'huile.

9. Vérin pneumatique suivant la revendication 7 ou 8, **caractérisé en ce que** l'accumulateur (51) à piston est intégré à la partie (7) de fermeture, contenant l'agencement (13) d'étanchéité, du tube (1) du vérin, de manière à ce que le cylindre (53 ; 59) de l'accumulateur (51) à piston soit, par son côté (43) de gaz, ouvert vers l'espace (17, 23) de pression de gaz du tube (1) du vérin.

10. Vérin pneumatique suivant la revendication précédente, **caractérisé en ce que** le cylindre de l'accumulateur est formé, dans la partie (7) de fermeture, par un espace (59) annulaire voisin de l'espace (17, 23) de pression de gaz, entourant la tige (9) du piston et contenant un piston (61) annulaire.

11. Vérin pneumatique suivant la revendication 2 ou l'une des revendications précédentes dépendantes de la revendication 2, **caractérisé en ce que** l'élément de coulissement a, à l'extrémité (15) de la tige (9) du piston, une partie (19) de guidage de type en piston.

12. Vérin pneumatique suivant la revendication 11, **caractérisé en ce que** la partie (19) de guidage n'est pas circulaire et est guidée par des parties (71) de coin, au moyen de glissières (73 ; 75) sur la paroi du tube (1) du vérin.

13. Vérin pneumatique suivant l'une des revendications précédentes, **caractérisé en ce que**, par le choix du diamètre extérieur et intérieur de la tige (9) du piston et du diamètre intérieur du tube (1) du vérin, on peu régler la caractéristique force-course du vérin pneumatique.
